# EUROPÄISCHE PATENTSCHRIFT

(11) **EP 0 737 415 B1**
(45) Veröffentlichungstag und Bekanntmachung des Hinweises auf die Patenterteilung: **07.07.1999**
(21) Anmeldenummer: 96105685.0
(22) Anmeldetag: 11.04.1996
(51) Int. Cl.: A01B 33/08, A01B 33/10

(54) **Zinken für ein Bodenbearbeitungsgerät**
Agricultural tine
Dent pour appareil agricole

(30) Priorität: 15.04.1995 DE 29506469 U
(43) Veröffentlichungstag der Anmeldung: 16.10.1996
(73) Patentinhaber: RDZ DUTZI GmbH, 76698 Ubstadt-Weiher (DE)
(72) Erfinder: Dutzi, Friedhelm, 76698 Ubstadt-Weiher/Zeutern (DE)
(74) Vertreter: Petersen, Frank, Dipl.-Ing.

(56) Entgegenhaltungen:
- EP-A- 0 259 620
- US-A- 3 663 063
- US-A- 4 326 592

## Beschreibung

Die Erfindung betrifft einen Zinken für einen Zinkenrotor eines Bodenbearbeitungsgerätes, der einen Schneidenabschnitt zum Aufbrechen und Zerkleinern des Bodens aufweist.

Bei den hier betrachteten Bodenbearbeitungsgeraten handelt es sich insbesondere um Bodenbearbeitungsgeräte, die hinter einem Ackerschlepper angekuppelt sind und auf dem Prinzip der nicht wendenden Bodenbearbeitung beruhen. An ihrem vorderen Ende tragen diese Bodenbearbeitungsgeräte Lockerungsschare, die über die Arbeitsbreite den Boden aufbrechen ohne ihn zu wenden. Hinter diesen Scharen sitzt dann der Zinkenrotor, mit dem Ernterückstände und Gründüngung in den oberen Bodenhorizont eingearbeitet werden und der dabei für den für eine Bandsaat notwendigen Erdstrom sorgt. Eine nachgeschaltete Packerwalze führt dann das Bodenbearbeitungsgerät in einer eingestellten Tiefe und sorgt gleichzeitig für die nötige Rückverfestigung des Bodens.

Bei den bisher bekannten Bodenbearbeitungsgeräten ist der Zinkenrotor als eine Welle ausgebildet, auf dem mit seitlichem Abstand zueinander die Zinken sitzen. Und zwar weisen die Zinken einen Flanschabschnitt auf, mit dem sie an der Welle befestigt sind und einen Schneidenabschnitt, mit dem der Boden aufgebrochen und zerkleinert wird. Der Schneidenabschnitt verschleißt dabei relativ stark und zwar insbesondere an der bezogen auf den Zinkenrotor radial außen liegenden Spitze. Diese zuerst in den Boden eintauchende Vorderkante des Schneidenabschnittes verschleißt dabei so stark, daß die Länge der Zinken über die Zeit merklich abnimmt und damit auch die Qualität der Bodenbearbeitung sinkt.

In diesem Zusammenhang ist es aus dem Bereich von Straßenbaumaschinen, insbesondere Asphaltfräsen bekannt, entsprechende Zinken an der zuerst in den Boden eintauchenden Vorderkante des Schneidenabschnittes mit einem Hartmetalleinsatz auszurüsten, der zur Befestigung einen Zapfen aufweist, mit dem er in einer Bohrung am Zinken steckt.

Die Verwendung eines Hartmetalleinsatzes ermöglicht es, den Zinken verschleißfester zu machen, wobei gleichzeitig die Kosten dieser Maßnahme im Vergleich zur Fertigung des gesamten Zinkens aus einem verschleißfesterem Material erheblich günstiger sind. Außerdem wäre ein ganz aus verschleißfesterem Material gefertigter Zinken erheblich spröder und somit bruchgefährdeter als der Zinken mit lediglich dem beanspruchten Bereich aus diesem Material.

Indem der Hartmetalleinsatz über einen Zapfen am Zinken zu befestigen ist, ist auch eine Befestigungsart gewählt, die für den Alltagseinsatz sehr geeignet ist, da Alternativen wie zum Beispiel eine Verschraubung des Hartmetalleinsatzes am Zinken sich aufgrund der permanenten stoßartigen Belastung leichter losrütteln könnten.

Für den Hartmetalleinsatz aus dem Straßenbaubereich ist es weiter bekannt, daß er an seinem Zapfen einen Abschnitt aufweist, der gegenüber der im Zinken liegenden Bohrung im Durchmesser reduziert ist und mit einer Spannhülse korrespondiert.

Diese metallische Spannhülse ist so bemessen, daß sich beim Einbringen des Zapfens in die Bohrung zwischen der Spannhülse und der Bohrung eine Preßpassung ergibt, zwischen Spannhülse und Zapfen aber eine Spielpassung. Der Hartmetalleinsatz wird durch einen vor der Spannhülse liegenden Absatz am Herausfallen aus der Spannhülse gehindert.

Die beim Eintreten des Zinkens in den Boden auf dessen Spitze wirkende Kräfte sind aber nicht immer genau in Eintrittsrichtung sondern können auch beispielsweise aufgrund von Steinen im Erdreich leicht schräg auf die Spitze wirken. Damit wird aber auch der Hartmetalleinsatz nicht exakt entlang der Mittelachse des Zapfens belastet sondern schräg zu dieser. Dadurch besteht auf Dauer die Gefahr, daß sich der Zapfen gegenüber der Hülse losschlägt und sich das Spiel vergrößert, was dann schnell zu einem fortschreitenden Verschleiß führt.

Es ist Aufgabe der Erfindung, einen solchen progressiv fortschreitenden Verschleiß zu unterbinden. Dabei soll die Anwendung und Montage weiterhin so problemlos wie bisher bleiben und keine weiteren Kosten verursachen.

Diese Aufgabe wird erfindungsgemäß mit den Merkmalen des Anspruchs 1 gelöst. Besondere Ausführungsarten werden in den Abhängigen Ausprüchen definiert.

Durch die Ausbildung der Hülse als Paßhülse erhält man auch zwischen Zapfen und Hülse eine Preßpassung und ein wie oben beschriebenes "Losrütteln" wird verhindert. Außerdem wird die Hülse als Paßhülse wegen der Kaltverformung verfestigt, was ebenfalls zur Verschleißminderung beiträgt. Außerdem erhält man durch die umlaufende Nut einen zusätzlichen Formschluß zwischen Paßhülse und Zapfenabschnitt, da sich das Material der Paßhülse in diese Vertiefungen einlegt. Dies kann beispielsweise aufgrund der elastischen Verformung des Paßhülsenmateriales erfolgen.

Andererseits kann bei einer entsprechenden Länge der Paßhülse, die etwas länger ist als der im Durchmesser reduzierte Abschnitt des Zapfens, auch erreicht werden, daß beim Einbringen des Zapfens in die Paßhülse diese gestaucht wird und das Material der Paßhülse aufgrund plastischer Verformung vorwärts fließt und sich dann in die lokalen Vertiefungen einlegt.

In diesem Zusammenhang hat es sich andererseits auch als vorteilhaft erwiesen, den im Durchmesser reduzierten Abschnitt des Zapfens im von der Paßhülse überdeckten Bereich lokal mit einer Erhebung zu versehen, insbesondere mit einem umlaufenden, konvex geformten Wulst, der insbesondere in Einbringrichtung des Zapfens der umlaufenden Nut nachgeordnet ist.

Durch diesen kann einerseits die Preßpassung zwischen Zapfen, Paßhülse und Bohrung weiter verstärkt werden, andererseits wird durch einen derart konvex geformten Wulst der Bereich, in dem Material der metallischen Paßhülse bis zu seiner Fließgrenze beansprucht wird und dann nach vorne in die lokalen Vertiefungen fließt, auf einen kleinen Bereich an der Innenwand der Paßhülse beschränkt. Und dies funktioniert auch dann, wenn die Paßhülse in etwa gleich lang oder kürzer als der im Durchmesser reduzierte Abschnitt des Zapfens ist.

Mit dem Wulst wird eine Verfestigung des Paßhülsenmaterials aufgrund einer Kaltverformung auf den genannten inneren Bereich beschränkt. Die Paßhülse hat damit weiterhin die Fähigkeit, in bezug auf seitlich wirkende Kräfte in Grenzen elastisch zu reagieren.

Um keine seitlichen Kräfte auf die Paßhülse wirken zu lassen, kann noch eine Führung des Zapfens direkt in der Bohrung vorgesehen sein.

Um eine gute Führung zwischen dem Zapfen und der Bohrung des Zinkens zu gewährleisten, ist es günstig, wenn der Zapfen einen Führungsabschnitt aufweist mit einem der Bohrung entsprechenden Durchmesser. Dadurch wird einem Kippen des Zapfens in der Bohrung entgegengewirkt und die Ausrichtung des Hartmetalleinsatzes gegenüber dem Zinken ist genau festgelegt.

Bei einer bevorzugten Ausführungsform des Hartmetalleinsatzes, weist dieser einen gegenüber dem Zapfen vergrößerten, insbesondere pilzförmigen Kopf auf, der so ausgebildet sein kann, daß die Vorderkante des Schneidenabschnittes des Zinkens im wesentlichen im Windschatten dieses Kopfes liegt. Damit ist besonders gut gewährleistet, daß das gegenüber dem Hartmetalleinsatz weichere Grundmaterial des Zinkens wirksam vor Verschleiß geschützt ist.

Da der Zinken sich im Bereich der Vorderkante des Schneidenabschnittes im Querschnitt verringert, ist die Wandung der den Zapfen des Hartmetalleinsatzes aufnehmenden Bohrung am vorderen Ende relativ dünn, während sie sich zum Grund der Bohrung hin verstärkt. Unter diesem Aspekt ist es vorteilhaft, den Zapfen des Hartmetalleinsatzes länger auszubilden als die Bohrung, so daß der Hartmetalleinsatz im Bohrungsgrund aufsitzt und zwischen dem Kopf des Hartmetalleinsatzes und der Vorderkante des Schneidenteils ein Spalt verbleibt. Damit werden stoßartige Belastungen des Hartmetalleinsatzes durch dessen Zapfen in Bereiche des Zinkens weitergeleitet, die eine relativ gute Stabilität haben und das relativ dünne vordere Ende wird vor Überbeanspruchung geschützt.

Weitere Vorteile und Merkmale der Erfindung ergeben sich aus der nachfolgenden Beschreibung eines Ausführungsbeispiels. Dabei zeigt
- Figur 1: einen Schnitt durch einen Zinkenrotor mit erfindungsgemäß weitergebildeten Zinken, teilweise aufgebrochen;
- Figur 2: einen Schnitt durch die Spitze eines erfindungsgemäßen Zinkens einmal vor, und dann nach der Befestigung eines Hartmetalleinsatzes mit Führungsabschnitt;
- Figur 3: einen Schnitt durch die Spitze eines erfindungsgemäßen Zinkens einmal vor, und dann nach der Befestigung eines Hartmetalleinsatzes ohne Führungsabschnitt.

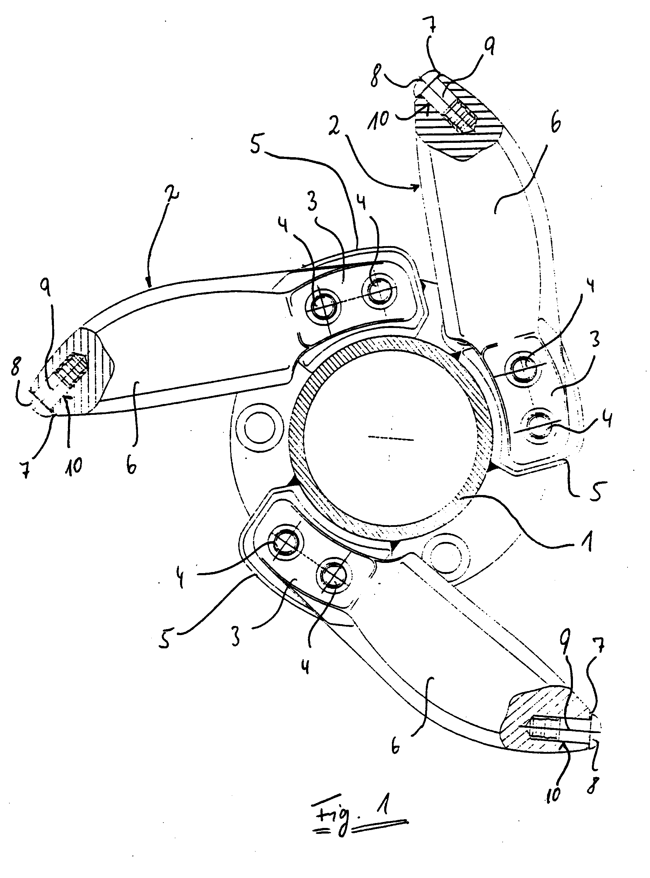

In der Figur 1 ist der Schnitt durch den Zinkenrotor eines Bodenbearbeitungsgerätes dargestellt. Auf einer rohrförmigen Welle 1 sind mehrere Zinken 2 befestigt. Und zwar weisen die Zinken einen Flanschabschnitt 3 auf, durch den zwei Schrauben 4 den Zinken mit einer Halterung 5 der Welle 1 auswechselbar verbinden.

Im Betrieb des Bodenbearbeitungsgerätes rotiert die dargestellte Welle 1 entgegen dem Uhrzeigersinn, wobei die Schneidenabschnitte 6 der Zinken 2 eine Flugbahn beschreiben, bei der sie in den mit dem Bodenbearbeitungsgerät zu bearbeitenden Boden eintauchen und dabei Ernterückstände, Gründüngung etc. in den Boden einarbeiten. Dabei verschleißen die Zinken insbesondere an der den Außenbogen der Flugbahn beschreibenden Vorderkante 7 des Schneidenabschnittes. Durch diesen Verschleiß werden die Zinken kürzer und da die Länge des Zinkens entscheidend ist für die Arbeitsgüte wird somit durch diesen Verschleiß die Standzeit des Zinkens bestimmt. Um diese Standzeit zu verlängern, tragen die Zinken 2 an der Vorderkante 7 des Schneidenabschnittes 6 einen Hartmetalleinsatz 8, der über einen Zapfen 9 in einer Bohrung 10 am Zinken steckt.

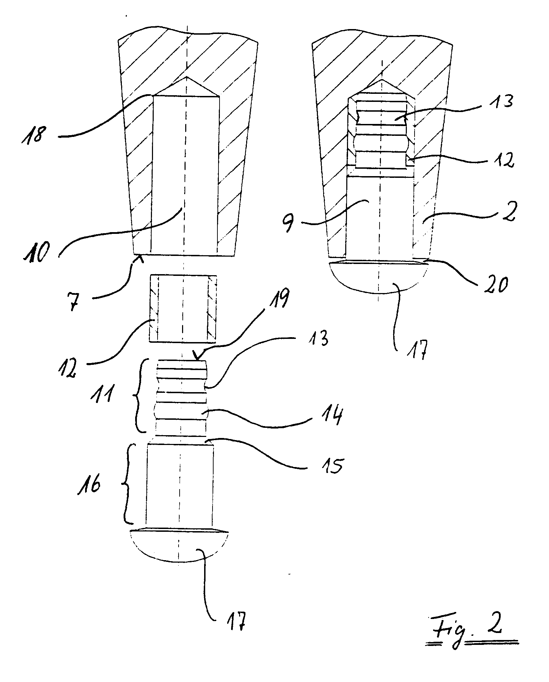

Dies ist in der Figur 2 genauer dargestellt:

Der Zapfen 9 weist einen gegenüber der Bohrung 10 am Zinken 2 im Durchmesser reduzierten Abschnitt 11 auf, der mit einer metallischen Paßhülse 12 korrespondiert. Die Paßhülse 12 hat in ihrem Ursprungszustand einen Außendurchmesser, der etwas kleiner ist als der Durchmesser der Bohrung 10, so daß sie leicht in die Bohrung 10 einzuschieben ist. Wenn dann der Hartmetalleinsatz 8 in der Bohrung 10 befestigt werden soll, wird er mit dem im Durchmesser reduzierten Abschnitt 11 des Zapfens 9 in die Paßhülse 12 eingetrieben, woraufhin diese sich weitet und sich fest an die Wandung der Bohrung 10 anlegt. Man erhält also eine Preßpassung sowohl zwischen dem Hartmetalleinsatz 8 und der Paßhülse 12 als auch zwischen der Paßhülse 12 und der Bohrung 10. Damit ist der Hartmetalleinsatz 8 auf relativ einfache Weise in der Bohrung 10 festgelegt.

Um den Hartmetalleinsatz 8 nicht nur kraftschlüssig in der Bohrung 10 zu halten, ist er in dem im Durchmesser reduzierten Abschnitt 11, der mit der metallischen Paßhülse 12 korrespondiert, mit einer umlaufenden Nut 13 versehen. In diese formt sich die Paßhülse 12 beim oben erwähnten Einschlagen des Hartmetalleinsatzes 8 ein, so daß sich zwischen Paßhülse 12 und dem Zapfen 9 des Hartmetalleinsatzes 8 ein Formschluß ergibt. Das Einformen der Paßhülse 12 in die umlaufende Nut 13 erfolgt zum Teil aufgrund der Elastizitätseigenschaften des Paßhülsenmaterials.

Im vorliegenden Beispiel wird das Einformen des Paßhülsenmaterials in die Nut 13 dadurch verstärkt, daß der im Durchmesser reduzierte Abschnitt 11 des Hartmetalleinsatzes 8 eine lokale Erhebung in Form eines konvex geformten Wulstes 14 aufweist. Durch diesen wird die Paßhülse 12 zum einen noch etwas stärker gegen die Wandung der Bohrung 10 gepreßt, zum anderen wird aber auch beim Einbringen des Zapfens 9 in die in der Bohrung 10 steckende Hülse 12 das vor dem Wulst 14 liegende Material der Paßhülse 12 nach vorne gedrängt. Es wird somit quasi nach vorne gedrückt und fließt dann in die Nut 13 hinein, so daß dadurch eine formschlüssige Verbindung zwischen dem Hartmetalleinsatzzapfen 9 und der Paßhülse 12 bewirkt wird.

Ein entsprechendes Vorwärtsfließen des Materials der Paßhülse 12 kann auch dadurch erreicht werden, daß beim Einschlagen des Hartmetalleinsatzes 8 in die Paßhülse 12 ein Absatz am Ende des Abschnittes 11 die Paßhülse 12 staucht. Bei der in der Figur 2 dargestellten Ausführungsform wurde dann der Wulst 14 fortfallen und die Paßhülse 12 würde über die sich am Ende des Abschnittes 11 befindliche Fase 15 entsprechend gestaucht und in die Nut 13 einfließen.

Die hier dargestellte Version hat aber den Vorteil, daß sich das Stauchen bzw. das Fließen des Paßhülsenmaterials zu einem großen Teil auf die Innenseite der Paßhülse beschränkt, so daß die Paßhülse an ihrer Außenseite nicht durch plastische Verformung belastet wird.

Als besonders geeignetes Material für die Paßhülse bietet sich Kupfer oder weiches Messing an.

Außer dem im Durchmesser reduzierten Abschnitt 11 weist der Hartmetalleinsatz 8 auch einen Abschnitt 16 auf, der im Durchmesser im wesentlichen der Bohrung 10 entspricht, so daß bei Einsetzen des Hartmetalleinsatzes 8 in die Bohrung 10 eine gute Führung gewährleistet ist und der Hartmetalleinsatz 8 nicht in der Bohrung 10 zur Seite kippt. So kann ein Losrütteln des Hartmetalleinsatzes wirksam unterbunden werden.

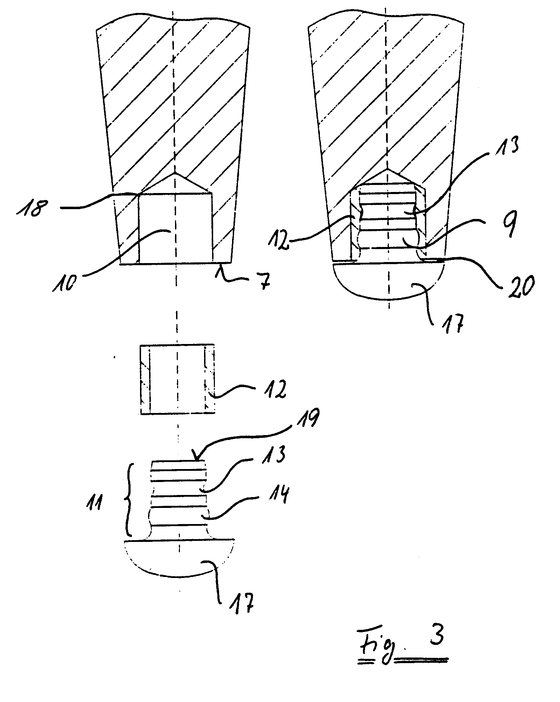

Wie in der Figur 3 dargestellt ist, ist ein solcher Abschnitt aber nicht unbedingt erforderlich und auch ohne diesen Abschnitt ist der Hartmetalleinsatz 8 sicher in der Bohrung 10 zu befestigen.

Der Hartmetalleinsatz 8 weist einen gegenüber dem Zapfen 9 vergrößerten Kopf 17 auf, der eine pilzförmige Gestalt hat. Diese ist für gutes Vorbeiströmen der Erde an dem Hartmetalleinsatz 8 von Vorteil.

Des weiteren ist der Kopf 17 so bemessen, daß die Vorderkante 7 des Schneidenabschnittes des Zinkens im wesentlichen im Windschatten dieses Kopfes liegt. Dadurch wird gewährleistet, daß sich auftretender Verschleiß auf den abriebfesten Hartmetalleinsatz beschränkt.

Da der Zinken 2 zur Vorderkante 7 hin im Durchmesser abnimmt, sind die Wandungen der Bohrung 10 im Bereich der Vorderkante 7 relativ dünn, während sie im Bereich des Bohrungsgrundes 18 erheblich stärker sind. Indem die Gesamtlänge des Zapfens 9 größer ist als die Länge der Bohrung 10, sitzt der Hartmetalleinsatz 8 nicht mit seinem Kopf 17 auf der Vorderkante 7 auf sondern er sitzt über sein Ende 19 auf dem genannten Bohrungsgrund 18 auf. Gleichzeitig bildet sich dabei zwischen dem Kopf 17 und der Vorderkante 7 ein Spalt 20. So ist gewährleistet, daß Stöße auf den Hartmetalleinsatz nicht auf die dünnen Wandungen im Bereich der Vorderkante 7 weitergeleitet werden sondern erst im widerstandsfähigeren Bereich um dem Bohrungsgrund 18 in den Zinken 2 eingeleitet werden.

Zusammenfassend hat der erfindungsgemäß ausgestaltete Zinken den Vorteil, daß er selbst aus relativ elastischem Material gebildet werden kann, während nur die wirklich verschleißträchtigen Teile an der Vorderkante des Schneidenabschnittes aus einem relativ spröden aber verschleißfesten Hartmetalleinsatz gebildet werden können.

## Patentansprüche

1. Zinken (2) für einen Zinkenrotor eines Bodenbearbeitungsgerätes, der einen Schneidenabschnitt (6) zum Aufbrechen und Zerkleinern des Bodens aufweist, und der an der zuerst in den Boden eintauchenden Vorderkante (7) des Schneidenabschnittes (6) einen Hartmetalleinsatz (8) trägt, der zur Befestigung einen Zapfen (9) aufweist, mit dem er in einer Bohrung (10) im Zinken (2) steckt, wobei der Zapfen (9) einen gegenüber der Bohrung (19) am Zinken (2) im Durchmesser reduzierten Abschnitt (11) aufweist, der mit einer metallischen Hülse (12) korrespondiert, die innerhalb der Bohrung (10) angeordnet ist,
dadurch gekennzeichnet,
daß der im Durchmesser reduzierte Abschnitt (11) im von der Hülse (12) überdeckten Bereich lokal mit Vertiefungen versehen ist, insbesondere mit einer umlaufenden Nut (13), und die Hülse (12) als Paßhülse ausgebildet ist und sowohl zwischen Hülse (12) und Bohrung (10) als auch zwischen Hülse (12) und Zapfen (9) eine Preßpassung hat.

2. Zinken gemäß Anspruch 1,
dadurch gekennzeichnet,
daß der im Durchmesser reduzierte Abschnitt (11) im von der Paßhülse (12) überdeckten Bereich lokal mit Erhebungen versehen ist, insbesondere mit einem umlaufenden, konvex geformten Wulst (14).

3. Zinken gemäß Anspruch 2,
dadurch gekennzeichnet,
daß der Wulst (14) hinter der umlaufenden Nut (13) angeordnet ist in bezug auf eine Einbringrichtung des Abschnittes (11) in die Paßhülse (12).

4. Zinken gemäß Anspruch 1,
dadurch gekennzeichnet,
daß der Zapfen (9) einen Abschnitt (16) aufweist mit einem der Bohrung (10) entsprechenden Durchmesser.

5. Zinken gemäß Anspruch 1,
dadurch gekennzeichnet,
daß der Hartmetalleinsatz (8) einen gegenüber dem Zapfen (9) vergrößerten, insbesondere pilzförmigen Kopf (17) aufweist.

6. Zinken gemäß Anspruch 5,
dadurch gekennzeichnet,
daß der Kopf (17) so groß ausgebildet ist, daß die Vorderkante (7) des Schneidenabschnitts (6) des Zinkens (2) im wesentlichen im Windschatten des Kopfes (17) liegt.

7. Zinken gemäß einem oder mehreren der vorhergehenden Ansprüche,
dadurch gekennzeichnet,
daß der Zapfen (9) länger als die Bohrung (10) ist, so daß der Hartmetalleinsatz (8) im Bohrungsgrund (18) aufsitzt und zwischen dem Kopf (17) und der Vorderkante (7) des Schneidenteils (6) ein Spalt (20) verbleibt.

## Claims

1. Tine (2) for a tine rotor of a tilling implement, which tine comprises a cutting portion (6) for breaking up and disintegrating the soil and bears at the front edge (7), which enters the soil first, of the cutting portion (6) a hard metal insert (8) which, for securing purposes, comprises a pin (9) with which it is fixed in a bore (10) in the tine (2), wherein the pin (9) comprises a portion (11) which is reduced in diameter with respect to the bore (10) in the tine (2) and which corresponds with a metallic sleeve (12) disposed inside the bore (10),
characterised in that the portion (11) of a reduced diameter is locally provided with depressions, in particular with a circumferential groove (13), in the region covered by the sleeve (12), the sleeve (12) is formed as a mating sleeve and there is a press fit both between the sleeve (12) and the bore (10) and between the sleeve (12) and the pin (9).

2. Tine according to claim 1,
characterised in that the portion (11) of a reduced diameter is locally provided with elevations, in particular with a circumferential, convex bead (14), in the region covered by the mating sleeve (12).

3. Tine according to claim 2,
characterised in that the bead (14) is disposed after the circumferential groove (13) in relation to a direction in which the portion (11) is introduced into the mating sleeve (12).

4. Tine according to claim 1,
characterised in that the pin (9) comprises a portion (16) of a diameter which corresponds to the bore (10).

5. Tine according to claim 1,
characterised in that the hard metal insert (8) comprises a head (17) which is enlarged with respect to the pin (9), being in particular mushroom-shaped.

6. Tine according to claim 5,
characterised in that the head (17) is of a size such that the front edge (7) of the cutting portion (6) of the tine (2) lies substantially on the leeward side of the head (17).

7. Tine according to one or more of the preceding claims,
characterised in that the pin (9) is longer than the bore (10), so that the hard metal insert (8) rests in the bottom (18) of the bore and a gap (20) remains between the head (17) and the front edge (7) of the cutting part (6).

## Revendications

1. Dent (2) pour un rotor à dents d'un appareil de travail du sol, qui présente une partie de tranchant (6) pour ouvrir et briser le sol, et qui porte, sur l'arête avant (7), s'enfonçant la première dans le sol, de la partie de tranchant (6), une mise en carbure (8) qui présente pour sa fixation un tenon (9) par lequel elle s'emboîte dans un perçage (10) prévu dans la dent (2), le tenon (9) présentant une partie (11) de diamètre réduit par rapport au perçage (10) de la dent (2), partie qui correspond à une douille métallique (12) qui est disposée à l'intérieur du perçage (10),
**caractérisée** en ce que la partie (11) de diamètre réduit est pourvue localement de renfoncements dans la région recouverte par la douille (12), notamment d'une rainure entourante (13), et la douille (12) est conçue comme douille d'ajustement et possède un ajustement serré tant entre la douille (12) et le perçage (10) qu'entre la douille (12) et le tenon (9).

2. Dent selon la revendication 1, **caractérisée** en ce que la partie (11) de diamètre réduit est pourvue localement de surélévations dans la région recouverte par la douille d'ajustement (12), notamment d'un bourrelet entourant (14), de forme convexe.

3. Dent selon la revendication 2, **caractérisée** en ce que le bourrelet (14) est disposé après la rainure entourante (13), par rapport à la direction d'introduction de la partie (11) dans la douille d'ajustement (12).

4. Dent selon la revendication 1, **caractérisée** en ce que le tenon (9) présente une partie (16) de diamètre correspondant au perçage (10).

5. Dent selon la revendication 1, **caractérisée** en ce que la mise en carbure (8) présente une tête (17) agrandie par rapport au tenon (9), notamment en forme de champignon.

6. Dent selon la revendication 5, **caractérisée** en ce que la tête (17) est réalisée d'une taille telle que l'arête avant (7) de la partie de tranchant (6) de la dent (2) se trouve pour l'essentiel sous le couvert de la tête (17).

7. Dent selon une ou plusieurs des revendications précédentes, **caractérisée** en ce que le tenon (9) est plus long que le perçage (10), de sorte que la mise en carbure (8) repose dans le fond (18) du perçage et qu'un interstice (20) reste présent entre la tête (17) et l'arête avant (7) de la partie de tranchant (6).
